Europäisches Patentamt

European Patent Office

Office européen des brevets

(19)

(11) EP 0 517 870 B1

# FASCICULE DE BREVET EUROPEEN

(12)

(45) Date de publication et mention
de la délivrance du brevet:
**10.07.1996 Bulletin 1996/28**

(21) Numéro de dépôt: **92901255.7**

(22) Date de dépôt: **20.12.1991**

(51) Int. Cl.$^6$: **B60C 9/00**

(86) Numéro de dépôt international:
**PCT/CH91/00277**

(87) Numéro de publication internationale:
**WO 92/12018 (23.07.1992 Gazette 1992/19)**

(54) **ASSEMBLAGES DE RENFORT AVEC MONOFILAMENTS EN POLYMERES ORGANIQUES CRISTAUX LIQUIDES**

VERSTÄRKUNGSANORDNUNG MIT MONOFILAMENTEN AUS FLÜSSIGKRISTALLINEN ORGANISCHEN POLYMEREN

REINFORCEMENT ASSEMBLIES WITH LIQUID CRYSTAL ORGANIC POLYMER MONOFILAMENTS

(84) Etats contractants désignés:
**BE CH DE ES FR GB IT LI LU NL**

(30) Priorité: **27.12.1990 FR 9016596**

(43) Date de publication de la demande:
**16.12.1992 Bulletin 1992/51**

(73) Titulaire: **MICHELIN RECHERCHE ET TECHNIQUE S.A.**
**CH-1700 Fribourg (CH)**

(72) Inventeurs:
- **BALESTRA, Claudio**
**CH-1723 Marly (CH)**
- **RIBIERE, Joel**
**CH-8304 Wallisellen (CH)**

(74) Mandataire: **Doussaint, Jean-Marie et al**
**MICHELIN & CIE**
**Service K. Brevets**
**23, Place des Carmes**
**63040 Clermont-Ferrand Cedex (FR)**

(56) Documents cités:
**EP-A- 0 373 094          WO-A-91/00381**
**DE-A- 2 721 787          US-A- 3 778 329**

- **WORLD PATENTS INDEX LATEST Accesion No 83-38398k week 16 Derwent Publications Ltd., London GB &JP-A-5843802 (SUMITOMO RUBBER IND KK) 14-03-83**
- **KAUTSCHUK UND GUMMI - KUNSTSTOFFE. vol. 36, no. 10, Octobre 1983, HEIDELBERG DE pages 870 - 874; B.PULVERMACHER ET AL.: 'HOCHFESTE FASERN IN DER KAUTSCHUKINDUSTRIE'**
- **PATENT ABSTRACTS OF JAPAN vol. 14, no. 17 (C-675)16 Janvier 1990 & JP-A-01259062 (TORAY IND. INC.) 16.JANUARY 1989**

**Description**

L'invention concerne les assemblages de renfort constitués au moins en partie par des monofilaments en matières organiques, ces assemblages étant utilisés pour renforcer des articles en matières plastiques et/ou en caoutchouc, notamment des enveloppes de pneumatiques.

Les brevets FR 1 495 730 et US 3 638 706 décrivent des assemblages de renfort réalisés avec des monofilaments conventionnels en polymères flexibles, le diamètre de ces monofilaments étant supérieur à 100 μm. Ces assemblages ont des ténacités et des modules d'extension faibles.

Il est connu d'utiliser des assemblages de renfort constitués par des retors de multifilaments en polymères organiques cristaux liquides, par exemple des multifilaments aramides, le diamètre de chaque filament élémentaire étant faible, de l'ordre de 13 μm. Ces assemblages possèdent des ténacités élevées, mais leur module d'extension est nettement inférieur à celui des multifilaments de départ.

La demande de brevet japonais JP-A-58-43802 décrit l'utilisation, dans le sommet d'une enveloppe de pneumatique, de monofilaments, éventuellement tordus ensemble, ces monofilaments pouvant être réalisés en polyamides aromatiques. Cette demande ne donne aucune indication sur les caractéristiques mécaniques de ces monofilaments ou des assemblages qu'ils constituent.

La demande internationale WO-A-9 100 381 (& EP-A-0 435 975 ; état de la technique selon Art. 54(3) CBE) incorporée ici par référence décrit des monofilaments aramides ayant des modules et des ténacités très élevés. Cette demande cite brièvement la possibilité d'utiliser ces monofilaments dans des assemblages de renfort, mais sans donner d'indication sur la structure et les propriétés de ces assemblages.

Le but de l'invention est donc de proposer un assemblage de renfort avec des monofilaments en polymère(s) organique(s) cristal (cristaux) liquide(s), cet assemblage ayant des ténacités et des modules d'extension très élevés.

En conséquence, l'assemblage de renfort conforme à l'invention, constitué au moins en partie par des monofilaments continus en polymère(s) organique(s) cristal (cristaux) liquide(s) est caractérisé par les points suivants :

a) le diamètre $D_m$ des monofilaments est au moins égal à 40 μm et inférieur à 400 μm ;
b) la ténacité $T_a$ de l'assemblage est supérieure à 80 cN/tex ;
c) le module sécant en extension $M_a$ de l'assemblage est supérieur à 2000 cN/tex ;
d) au moins un des monofilaments est pratiquement enroulé en hélice autour d'un axe, l'angle aigu $\gamma$ que fait chaque monofilament avec cet axe supposé rectiligne étant inférieur à 30° ;
e) la torsion de chaque monofilament sur lui-même est inférieure à 10 tours par mètre d'assemblage.

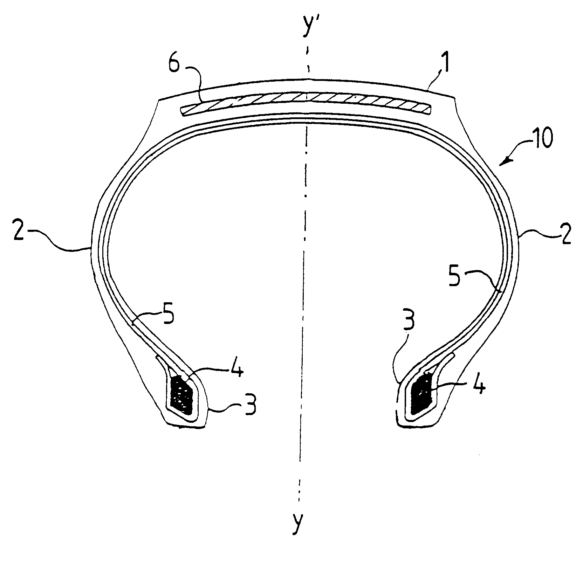

L'invention concerne également les articles renforcés par ces assemblages, notamment les enveloppes de pneumatiques. L'invention sera aisément comprise à l'aide des exemples non limitatifs qui suivent et de la figure schématique relative à ces exemples, cette figure étant une coupe d'une enveloppe de pneumatique.

Pour la simplicité de l'exposé, dans la suite du texte le terme "monofilament" désigne uniquement des monofilaments dont le diamètre est au moins égal à 40 μm et le terme "filament" désigne uniquement des monofilaments dont le diamètre est inférieur à 40 μm. Le terme "filé" représente un ensemble de plusieurs filaments continus, cet ensemble étant pratiquement dépourvu de torsion. Le terme "produit" désigne un monofilament, un filé, un assemblage textile.

Par "polymère cristal liquide", on entend ici de manière connue un polymère capable de donner une composition de filage optiquement anisotrope à l'état fondu et au repos, c'est-à-dire en l'absence de contrainte dynamique, que le polymère lui-même se trouve à l'état fondu (auquel cas il est dit "thermotrope"), ou en solution (auquel cas il est dit "lyotrope"). Une telle composition dépolarise la lumière lorsqu'on l'observe à travers un microscope entre polariseurs linéaires croisés.

L'invention sera illustrée par les exemples qui suivent, ces exemples étant réalisés, sauf indication contraire, avec des filaments ou des monofilaments aramides.

## I - Détermination des caractéristiques

### 1 - Conditionnement

Par conditionnement on entend dans cette description le traitement des produits selon la norme d'Allemagne Fédérale DIN 53 802-20/65 de juillet 1979.

### 2 - Titre

Le titre des produits est déterminé selon la norme d'Allemagne Fédérale DIN 53 830 de juin 1965, ces produits ayant au préalable subi un conditionnement.

La mesure est effectuée par pesée d'au moins trois échantillons, chacun correspondant à une longueur de 50 m lorsqu'il s'agit d'un monofilament ou d'un filé, ou à une longueur de 5 m lorsqu'il s'agit d'un assemblage. Le titre est exprimé en tex. Il est référencé $(Ti)_m$ pour les monofilaments et $(Ti)_a$ pour les assemblages.

3 - Diamètre

Le diamètre des monofilaments est déterminé par le calcul à partir du titre des monofilaments et de leur masse volumique, selon la formule :

$$D_m = 2 \times 10^{1,5}[(Ti)_m/\pi\rho]^{1/2}$$

$D_m$ représentant le diamètre des monofilaments en µm, $(Ti)_m$ représentant le titre en tex, et $\rho$ représentant la masse volumique en g/cm$^3$.

Le diamètre $D_a$ des assemblages textiles est mesure selon le procédé suivant. L'assemblage est sous tension, cette tension est comprise entre 0,9 fois et 1,1 fois la prétension standard qui est de 0,5 cN/tex. L'assemblage coupe un faisceau de lumière parallèle. L'ombre portée sur une barrette de diodes photoréceptrices est mesurée instantanément. Le résultat d'une mesure est la largeur moyenne de l'ombre, déterminée en 900 points sur 50 cm d'assemblage. Le diamètre $D_a$ de l'assemblage est calculé en faisant la moyenne de quatre mesures, et il est exprimé en µm.

4 - Propriétés dynamométriques

Les propriétés dynamométriques des produits sont mesurées à l'aide d'une machine de traction Zwick GmbH & Co (Allemagne Fédérale) de type 1435 ou 1445, correspondant aux normes d'Allemagne Fédérale DIN 51 220 d'octobre 1976, DIN 51 221 d'août 1976 et DIN 51 223 de décembre 1977 selon le mode opératoire décrit dans la norme d'Allemagne Fédérale DIN 53 834 de février 1976. Les produits sont tractionnés sur une longueur initiale de 400 mm. Dans le cas des filés, les mesures sont effectuées après leur avoir donné une torsion de protection préalable égale à 100 tours par mètre.

On détermine ainsi les propriétés suivantes :

ténacité, module initial $M_i$, module sécant $M_a$, allongement à la rupture. La ténacité et les modules d'extension $M_i$, $M_a$ sont exprimés en cN/tex (centinewton par tex). L'allongement à la rupture est exprimé en %.

- La ténacité est mesurée pour tous les produits, elle est référencée $T_m$ pour les monofilaments et $T_a$ pour les assemblages texiles.

- Le module initial $M_i$ est défini comme la pente de la partie linéaire de la courbe contrainte-déformation qui intervient juste après la prétension standard de 0,5 cN/tex. Ce module $M_i$ est mesuré pour les monofilaments et les filés.

- Le module sécant $M_a$ est calculé pour les assemblages selon la relation :

$$M_a = 400 \times \frac{F_1 - F_2}{(Ti)_a}$$

avec

$F_1$ :     force à laquelle est soumis l'assemblage pour un allongement de 0,35 % ;
$F_2$ :     force à laquelle est soumis l'assemblage pour un allongement de 0,10 %.

- L'allongement à la rupture est déterminé pour tous les produits. Il est désigné $(Ar)_m$ pour les monofilaments et $(Ar)_a$ pour les assemblages.

Toutes les propriétés dynamométriques sont déterminées en faisant la moyenne de dix mesures.

5 - Masse volumique

On mesure les masses volumiques $\rho$ des monofilaments en utilisant la technique du tube à gradient de masse volumique pour matières plastiques spécifiée dans la norme ASTM D1505-68 (réapprouvée en 1975), méthode C en utilisant un mélange de 1,1,2-trichlorotrifluoroéthane et de 1,1,1-trichloroéthane comme système liquide pour le tube à gradient de masse volumique.

Les échantillons utilisés sont de courts tronçons d'environ 2 cm de monofilaments noués de manière non serrée. Avant mesure, ils sont immergés deux heures dans la composante du système liquide qui possède la masse volumique la plus faible, Ensuite ils demeurent 12 heures dans ledit tube avant d'être évalués. On veille particulièrement à éviter la rétention de bulles d'air à la surface des monofilaments.

On détermine la masse volumique en $g/cm^3$ de 2 échantillons par monofilament, et on rapporte la valeur moyenne avec 4 chiffres significatifs.

6 - Viscosité inhérente

La viscosité inhérente (V.I.) du polymère est exprimée en décilitre par gramme et définie par l'équation suivante :

$$V.I. = (1/C)\, Ln\, (t_1/to)$$

où

- C est la concentration de la solution de polymère (0,5 g de polymère dans 100 $cm^3$ de solvant). Le solvant est de l'acide sulfurique concentré à 96 %.

- Ln est le logarithme népérien.

- $t_1$ et to représentent le temps d'écoulement de la solution de polymère et du solvant pur, respectivement, à 30 ± 0,1°C dans un viscosimètre à capillaire de type Ubbelohde.

7 - Caractéristiques optiques

L'anisotropie optique des compositions de filage, à l'état fondu et au repos, est observée à l'aide d'un microscope de polarisation du type Olympus BH2, équipé d'une platine chauffante.

II - **Réalisation des monofilaments**

Les monofilaments aramides sont préparés conformément au procédé revendiqué dans la demande WO-A-9 100 381 précitée. Les points essentiels de cette préparation sont les suivants :

a) on utilise une solution d'au moins un polyamide aromatique tel qu'au moins 85 % des liaisons amides (-CO-NH-) soient reliées directement à deux noyaux aromatiques, la viscosité inhérente de ce(s) polyamide(s) étant au moins égale à 4,5 dl/g, la concentration de polyamide(s) dans la solution étant d'au moins 20 % en poids, cette composition de filage étant optiquement anisotrope à l'état fondu et au repos ;

b) on extrude cette solution dans une filière, à travers un capillaire dont le diamètre est supérieur à 80 $\mu m$ , la température de filage, c'est-à-dire la température de la solution lors de son passage dans le capillaire, étant au plus égale à 105°C ;

c) le jet liquide sortant du capillaire est étiré dans une couche de fluide non coagulante ;

d) on introduit ensuite la veine liquide étirée ainsi obtenue dans un milieu coagulant, le monofilament ainsi en cours de formation restant en contact dynamique avec le milieu coagulant pendant le temps "t", la température du milieu coagulant étant au plus égale à 16°C ;

e) on lave et on sèche le monofilament ; le diamètre $D_m$ du monofilament sec ainsi terminé et le temps t sont reliés par les relations suivantes :

$$t = KD_m^2 \; ; K > 30$$

t étant exprimé en seconde et $D_m$ étant exprimé en millimètre.

Les monofilaments préparés selon ce procédé vérifient chacun les relations suivantes :

$$1,7 \leq (Ti)_m < 180 \; ;$$

$$40 \leqq D_m < 400 \; ;$$

$$T_m \geqq 170 - D_m/3 \; ;$$

$$Mi > 2000 \; ;$$

$(Ti)_m$ étant le titre en tex, $D_m$ étant le diamètre en μm (micromètre), $T_m$ étant la ténacité en cN/tex, Mi étant le module initial en cN/tex, pour ce monofilament.

Divers additifs ou substances tels par exemple que des plastifiants, des lubrifiants, des produits pouvant améliorer l'adhésivité du produit à une matrice de gomme, peuvent éventuellement être incorporés au polymère, à la solution de filage, ou appliqués à la surface du monofilament, au cours des différentes étapes du procédé précédemment décrit.

### III - Exemples de réalisation et/ou d'utilisation d'assemblages

On utilise trois enveloppes de pneumatiques de dimension 135/70-13. Une de ces enveloppes est conforme à l'invention, les deux autres sont des enveloppes témoins. La figure représente schématiquement l'enveloppe conforme à l'invention. Cette enveloppe 10 comporte un sommet 1, deux flancs 2, deux bourrelets 3 renforcés chacun par une tringle 4. Une nappe carcasse radiale 5 est disposée d'un bourrelet 3 à l'autre en s'enroulant autour des tringles 4. Le sommet 1 est renforcé par une armature 6. Ces trois enveloppes sont identiques sauf pour l'armature 6 de renfort sommet qui est réalisée de la façon suivante.

#### Enveloppe conforme à l'invention

Elle est renforcée par des assemblages conformes à l'invention qui ont la formule (1+6)18, c'est-à-dire une formule de type "câble à couches" avec un monofilament servant d'âme et six monofilaments enroulés en hélice autour de cette âme de façon à former une couche, le diamètre des monofilaments étant d'environ 0,18 mm (180 μm). Les monofilaments sont en poly(p-phénylène téréphtalamide), et ils sont préparés conformément au chapitre II.

Les caractéristiques moyennes des monofilaments sont les suivantes :

$(Ti)_m$ : 36,4 tex
$D_m$ : 180 μm
$T_m$ : 149 cN/tex
Mi : 5300 cN/tex
$(Ar)_m$ : 3,7 %
ρ : 1,43 g/cm$^3$

Les caractéristiques de l'assemblage sont les suivantes :

γ : 6 degrés
$(Ti)_a$ : 258 tex
$D_a$ : 540 μm
$T_a$ : 140 cN/tex
$M_a$ : 4600 cN/tex
$(Ar)_a$ : 3,9 %

L'angle γ de 6° correspond à l'angle aigu que font les six monofilaments de la couche avec l'axe de l'assemblage, le monofilament formant l'âme étant orienté selon cet axe, et donc avec un angle γ nul ou pratiquement nul, sa torsion sur lui-même étant pratiquement nulle.

La torsion de chaque monofilament sur lui-même dans la couche de l'assemblage est inférieure à 10 tours par mètre d'assemblage. On utilise deux nappes superposées. Chaque nappe comporte des assemblages disposés parallèlement les uns aux autres avec un espace de 0,8 mm entre deux assemblages voisins, mesuré d'axe en axe.

Dans chaque nappe les assemblages font un angle de 22 degrés avec le plan équatorial de l'enveloppe 10, représenté par la ligne yy' sur la figure, ces nappes étant croisées par rapport à ce plan équatorial.

#### Enveloppe non conforme à l'invention, avec fils d'acier

L'armature 6 de renfort sommet comporte deux nappes renforcées chacune avec des câbles métalliques de formule 6/23. Chacun de ces câbles est constitué par 3 torons enroulés ensemble, chacun de ces torons étant constitué par deux fils enroulés ensemble. Le pas de l'assemblage est de 12,5 mm ainsi que le pas de chaque toron. L'enroulement en hélice des fils d'un toron est effectué dans un sens opposé à celui de l'enroulement des fils des deux autres torons. Chaque fil est en acier laitonné et il a un diamètre de 0,23 mm, une résistance à la rupture de 2886 MPa, et un allongement à la rupture de 2,4 %. Chaque câble a un diamètre de 0,77 mm, une résistance à la rupture de 2760 MPa, un module en extension de 195 GPa et un allongement à la rupture de 2,1 %. Ces caractéristiques mécaniques sont définies conformément à la norme ASTM-D-2969.

Dans chaque nappe les câbles d'acier font un angle de 22 degrés avec le plan équatorial yy' de l'enveloppe 10, ces nappes étant croisées par rapport à ce plan équatorial, les câbles d'une nappe quelconque étant parallèles entre eux, c'est-à-dire que la disposition générale des nappes est la même pour l'enveloppe conforme à l'invention et pour cette enveloppe témoin. La distance d'axe en axe entre deux câbles d'acier voisins est de 1,7 mm.

Enveloppe non conforme à l'invention avec retors en aramides

L'armature 6 de renfort sommet comporte deux nappes renforcées chacune avec des retors en KEVLAR ® 29 type 950 de la Société du Pont de Nemours, de formule 167x2. Chacun de ces retors est constitué par deux filés de titre de 167 tex chacun tordus individuellement à 315 tours par mètre et tordus ensemble en sens inverse à 315 tours par mètre. Les caractéristiques de ce type de filé sont une ténacité de 185 cN/tex, un allongement à la rupture de 3,6 % et un module initial de 4900 cN/tex. Les caractéristiques du retors réalisé sont une ténacité de 150 cN/tex, un allongement à la rupture de 5,1 %, et un module sécant de 1950 cN/tex.

La disposition générale des nappes est la même que pour les enveloppes précédemment décrites. La distance d'axe en axe entre deux retors, dans ce cas, est de 1,25 mm.

Chacune des nappes, conforme ou non à l'invention, a une résistance à la rupture en traction d'environ 4000 N par cm de largeur, cette résistance étant mesurée parallèlement aux axes des assemblages de la nappe, la distance d'axe en axe préalablement mentionnée, ainsi que la largeur, étant mesurées perpendiculairement à ces axes.

Les assemblages conformes à l'invention, avant incorporation dans la gomme, ont subi le traitement suivant.

Ces assemblages sont mis au contact d'un plasma pendant environ 30 minutes, les conditions de ce traitement étant :

gaz du plasma : oxygène,

pression du gaz :20 Pa (150 millitorrs),

puissance de l'appareil :2,5 kW.

Les assemblages, après traitement au plasma, passent dans un premier bain de résine époxy, ils subissent un traitement thermique entre 210 et 260°C pendant un temps compris entre 20 et 120 secondes, par exemple à 250°C pendant 30 secondes. On les fait passer ensuite dans un deuxième bain, à base de latex terpolymère butadiène/styrène/vinylpyridine, de résorcine et de formaldéhyde, et ils subissent un traitement thermique entre 210 et 260°C pendant un temps compris entre 20 et 120 secondes, par exemple à 250°C pendant 30 secondes.

Dans l'enveloppe témoin avec retors en aramides, les retors, avant incorporation dans la gomme, subissent le même traitement à deux bains que les assemblages conformes à l'invention, mais sans traitement préalable au plasma.

La gomme des armatures 6 est la même pour les trois enveloppes, cette gomme étant de type connu.

Les poids des enveloppes sont les suivants : enveloppe témoin à fils d'acier (A) : 4,36 kg ; enveloppe conforme à l'invention (B) : 4,06 kg ; enveloppe témoin avec retors (C) : 3,94 kg.

Les trois enveloppes précitées subissent les tests suivants :

1) Poussée de dérive

Chaque enveloppe est montée sur une roue 4.00 J 13, elle est soumise à une charge de 315 daN et gonflée à 2,2 bars. On la fait rouler à une vitesse de 40 km/h sur un volant de circonférence 8,5 m. On fait varier l'angle de dérive et on mesure la poussée de dérive de façon connue en mesurant l'effort transversal sur la roue pour chacun de ces angles.

Les résultats sont donnés dans le tableau 1.

TABLEAU 1

| Poussée de dérive (daN) | | | | | | |
|---|---|---|---|---|---|---|
| Enveloppe | ANGLE DE DERIVE (degrés) | | | | | |
| | 1 | 2 | 3 | 4 | 5 | 6 |
| A | 66,7 | 125,8 | 174,3 | 212,9 | 237,5 | 251,2 |
| B | 64,2 | 122,6 | 171,9 | 210,4 | 233,8 | 247,8 |
| C | 62,9 | 118,2 | 158,5 | 188,0 | 210,0 | 226,3 |
| A : enveloppe témoin à fils d'acier<br>B : enveloppe conforme à l'invention<br>C : enveloppe témoin avec retors | | | | | | |

On constate donc que l'enveloppe conforme à l'invention a un comportement très semblable à celui de l'enveloppe témoin à fils d'acier, non conforme à l'invention, mais très différent de l'enveloppe ayant un sommet textile en retors aramides, elle aussi non conforme à l'invention, dont la poussée de dérive est très inférieure.

2) Résistance au roulement

Chaque enveloppe est montée sur roue 4.00 J 13, elle est gonflée à 2,2 bars et soumise à une charge de 315 daN. On mesure la résistance au roulement en fonction de la vitesse de roulement de l'enveloppe sur un volant dont la circonférence est de 8,5 m. La résistance au roulement est définie comme étant le rapport entre la force s'opposant au roulement, exprimée en daN, et la charge appliquée sur l'enveloppe, exprimée en tonnes.

Les résultats sont donnés dans le tableau 2.

TABLEAU 2

| Résistance au roulement (daN/t) | | | | | | |
|---|---|---|---|---|---|---|
| Enveloppe | VITESSES (km/h) | | | | | |
| | 60 | 80 | 100 | 120 | 140 | 160 |
| A | 11,19 | 11,50 | 12,11 | 13,17 | 15,60 | 19,26 |
| B | 11,08 | 11,48 | 12,06 | 13,18 | 15,57 | 19,35 |
| C | 11,28 | 11,30 | 12,05 | 12,95 | 15,08 | 18,68 |

A : enveloppe témoin à fils d'acier
B : enveloppe conforme à l'invention
C : enveloppe témoin avec retors

On constate donc que les trois enveloppes ont un comportement pratiquement équivalent.

3) Chocs sommet

Chaque enveloppe est montée sur une roue 4.00 J 13 et elle est gonflée à 2,2 bars. On fait tomber d'une hauteur variable sur le sommet de chaque enveloppe un indenteur hémisphérique, guidé en translation verticale, le choc s'effectuant au centre de la bande de roulement. On détermine l'énergie nécessaire pour percer les deux nappes sommet de chaque enveloppe. Les résultats sont donnés dans le tableau 3.

TABLEAU 3

| Chocs sommet | |
|---|---|
| ENVELOPPE | ENERGIE DE RUPTURE (Nm) |
| A | 223 |
| B | 264 |
| C | > 314 |

A : enveloppe témoin à fils d'acier
B : enveloppe conforme à l'invention
C : enveloppe témoin avec retors

L'enveloppe conforme à l'invention (B) possède donc une meilleure résistance aux chocs que l'enveloppe témoin à fils d'acier (A), l'enveloppe témoin avec retors (C) ayant la meilleure résistance aux chocs.

4) Endurance

Chaque enveloppe est montée sur une roue 4.00 J 13 et elle est gonflée à 2 bars. On la fait rouler sur un volant de 22 m de circonférence, à une vitesse moyenne de 72 km/h, sous une charge de 320 daN avec des séquences de surcharge, et sur différents types de revêtements et d'obstacles qui génèrent volontairement des cisaillements dans les nappes sommet. On arrête le test à 40 000 km et on constate que les trois enveloppes ne présentent alors aucune détérioration notable, c'est-à-dire qu'elles se comportent de façon équivalente.

En conclusion, l'enveloppe conforme à l'invention est plus légère que l'enveloppe à fils d'acier tout en ayant pratiquement la même poussée de dérive, la même résistance au roulement, la même tenue en endurance, et une meilleure résistance à la perforation.

D'autre part, l'enveloppe conforme à l'invention a une bien meilleure poussée de dérive que l'enveloppe témoin avec retors.

Lorsque l'angle $\gamma$ devient égal ou supérieur à 30° et/ou lorsque la torsion d'un monofilament sur lui-même devient égale ou supérieure à 10 tours/mètre, la ténacité $T_a$ de l'assemblage ainsi que son module $M_a$ subissent une diminution excessive.

Les assemblages conformes à l'invention sont économiquement avantageux et peuvent être réalisés, quelle que soit l'architecture des assemblages, sur les machines existantes pour le câblage des fils d'acier.

De préférence dans l'assemblage conforme à l'invention, on a $\gamma < 20°$, et avantageusement on a $\gamma < 10°$.

De préférence, dans l'assemblage conforme à l'invention, on a au moins une des relations suivantes :

$$T_a \geq 110 \; ; M_a \geq 3000 \; ; (Ar)_a > 3.$$

Avantageusement, on a au moins une des relations suivantes :

$$T_a \geq 140 \; ; M_a \geq 4000 \; ; (Ar)_a > 3,5.$$

De préférence, le monofilament utilisé dans l'assemblage conforme à l'invention vérifie les relations précédemment citées :

$$1,7 \leq (Ti)_m < 180 \; ; T_m \geq 170 - D_m/3 \; ; Mi > 2000, \text{ et}$$

il vérifie de préférence la relation $(Ar)_m > 2$.

Avantageusement lorsque ce monofilament est en aramide, il vérifie les relations préférentielles données dans la demande WO-A-9 100 381 précitée, et notamment au moins une des relations suivantes :

$$T_m \geq 190 - D_m/3 \; ; Mi \geq 6800 - 10 \, D_m \; ; (Ar)_m > 3.$$

Dans ces relations les ténacités et modules sont exprimés en cN/tex, les allongements à la rupture en %, $D_m$ est exprimé en µm et $(Ti)_m$ est exprimé en tex.

Les exemples conformes à l'invention précédents ont été réalisés avec des monofilaments en poly(p-phénylène téréphtalamide) mais on peut utiliser d'autres monofilaments aramides conformes à la demande WO-A-9 100 381 précitée, ou des monofilaments autres que des aramides, par exemple des monofilaments en polyesters aromatiques. On peut aussi utiliser des combinaisons de monofilaments formés de polymères différents, par exemple un assemblage comportant des monofilaments aramides et des monofilaments en polyesters aromatiques.

L'exemple qui suit concerne un assemblage conforme à l'invention en monofilaments aramides autres qu'en poly(p-phénylène téréphtalamide).

Ces monofilaments sont en copolyamide aromatique, ce copolyamide étant obtenu à partir des monomères suivants : dichlorure de téréphtaloyle, paraphénylène diamine, 1,5-naphtylène diamine (NDA), avec 3 moles de NDA pour 100 moles de diamines, ces monofilaments étant conformes à la demande WO-A-9 100 381 précitée.

Les caractéristiques moyennes des monofilaments sont les suivantes :
$(Ti)_m$ : 36,3 tex
$D_m$ : 180 µm
$T_m$ : 121 cN/tex
Mi : 4570 cN/tex
$(Ar)_m$ : 3,2 %
$\rho$ : 1,42 g/cm$^3$
Les caractéristiques de l'assemblage sont les suivantes, cet assemblage ayant la formule (1+6)18 :
$\gamma$ : 6 degrés
$(Ti)_a$ : 257 tex
$D_a$ : 540 µm
$T_a$ : 109 cN/tex
$M_a$ : 3820 cN/tex
$(Ar)_a$ : 3,4 %
Toutes ces caractéristiques sont déterminées conformément au chapitre I précédent, ces monofilaments étant réalisés conformément au chapitre II précédent.

L'exemple qui suit concerne un assemblage avec des monofilaments en polyester aromatique.

Ces monofilaments sont obtenus par filage au fondu d'un polyester aromatique commercial Vectra ® de la Société Hoechst Celanese, la température d'extrusion du polymère étant voisine de 340°C, à travers un capillaire (diamètre 800 µm) d'une filière maintenue à la température de 270°C. Le jet liquide sortant de la filière est étiré dans l'air (rapport d'étirage égal à 19,8) et il est solidifié par passage dans une zone de trempe thermique.

Le monofilament ainsi obtenu est prélevé sur un dispositif de bobinage à une vitesse de 590 m/min, pour être soumis ensuite à un traitement thermique de postpolycondensation sur la bobine de réception. Ce traitement est réalisé selon différents paliers de température compris entre 220 et 260°C, et une étape finale de 16 h à 270°C.

Les monofilaments ainsi filés et traités ont les caractéristiques moyennes suivantes :

$(Ti)_m$ : 36,4 tex

$D_m$ : 182 µm

$T_m$ : 131 cN/tex

Mi : 4300 cN/tex

$(Ar)_m$ : 2,5 %

$\rho$ : 1,40 g/cm$^3$

Les caractéristiques de l'assemblage sont les suivantes, cet assemblage ayant la formule (1+6)18 :

$\gamma$ : 6 degrés

$(Ti)_a$ : 258 tex

$D_a$ : 545 µm

$T_a$ : 112 cN/tex

$M_a$ : 3800 cN/tex

$(Ar)_a$ : 2,5 %

Toutes ces caractéristiques sont déterminées conformément au chapitre I précédent.

Les exemples conformes à l'invention précédemment décrits étaient entièrement réalisés avec des monofilaments continus en polymères cristaux liquides, mais l'invention s'applique aux cas où les assemblages comportent d'autres constituants que de tels monofilaments, par exemple des caoutchoucs ou des résines plastiques formant une âme ou imprégnant au moins en partie ces monofilaments, ou des éléments de renforts formés de fibres courtes ou de fils minéraux ou métalliques.

Bien entendu, l'invention n'est pas limitée aux exemples de réalisation précédemment décrits. C'est ainsi par exemple qu'elle s'applique à des assemblages autres que ceux de formule (1+6), les assemblages conformes à l'invention étant de préférence de formule type "câbles à couches" (couches saturées ou insaturées), par exemple de formule (3 + 8), avec trois monofilaments câblés entre eux servant d'âme, et une couche de 8 monofilaments enroulés autour de cette âme, ces assemblages pouvant éventuellement comporter plusieurs couches de monofilaments.

Les assemblages conformes à l'invention peuvent être réalisés selon des procédés et avec des dispositifs connus. Ces procédés et ces dispositifs qui ne sont pas décrits, dans un but de simplification, peuvent être par exemple des procédés et des dispositifs de câblage, analogues à ceux utilisés pour réaliser des assemblages avec fils métalliques, de telle façon que la torsion des monofilaments sur eux-mêmes soit inférieure à 10 tours par mètre d'assemblage.

**Revendications**

1. Assemblage de renfort constitué au moins en partie par des monofilaments continus en polymère(s) organique(s) cristal (cristaux) liquide(s), caractérisé par les points suivants :

    a) le diamètre $D_m$ des monofilaments est au moins égal à 40 µm et inférieur à 400 µm ;
    b) la ténacité $T_a$ de l'assemblage est supérieure à 80 cN/tex ;
    c) le module sécant en extension $M_a$ de l'assemblage est supérieur à 2000 cN/tex ;
    d) au moins un des monofilaments est pratiquement enroulé en hélice autour d'un axe, l'angle aigu $\gamma$ que fait chaque monofilament avec cet axe supposé rectiligne étant inférieur à 30° ;
    e) la torsion de chaque monofilament sur lui-même est inférieure à 10 tours par mètre d'assemblage.

2. Assemblage selon la revendication 1, caractérisé en ce que l'angle $\gamma$ est inférieur à 20°.

3. Assemblage selon la revendication 2, caractérisé en ce que l'angle $\gamma$ est inférieur à 10°.

4. Assemblage selon l'une quelconque des revendications 1 à 3, caractérisé en ce qu'il vérifie au moins une des relations suivantes :

$$T_a \geqq 110 \; ; M_a \geqq 3000 \; ; (Ar)_a > 3.$$

$(Ar)_a$ étant l'allongement à la rupture de l'assemblage exprimé en %.

**5.** Assemblage selon la revendication 4, caractérisé en ce qu'il vérifie au moins une des relations suivantes :

$$T_a \geq 140 \; ; M_a \geq 4000 \; ; (Ar)_a > 3,5.$$

**6.** Assemblage selon l'une quelconque des revendication 1 à 5, caractérisé en ce qu'au moins un des monofilaments vérifie les relations :

$$1,7 \leq (Ti)_m < 180 \; ;$$

$$T_m \geq 170 - D_m/3 \; ;$$

$$Mi > 2000 \; ;$$

$(Ti)_m$ étant le titre du monofilament exprimé en tex, $T_m$ étant la ténacité du monofilament exprimée en cN/tex, Mi étant le module initial du monofilament exprimé en cN/tex, $D_m$ étant exprimé en μm.

**7.** Assemblage selon la revendication 6, caractérisé en ce que le monofilament est un monofilament aramide.

**8.** Assemblage selon l'une quelconque des revendications 6 ou 7, caractérisé en ce que le monofilament vérifie la relation suivante :

$$(Ar)_m > 2$$

$(Ar)_m$ étant l'allongement à la rupture du monofilament.

**9.** Assemblage selon la revendication 8, caractérisé en ce que le monofilament est en aramide et vérifie au moins une des relations suivantes :

$$T_m \geq 190 - D_m/3 \; ; Mi \geq 6800 - 10D_m \; ; (Ar)_m > 3.$$

**10.** Assemblage selon la revendication 9, caractérisé en ce que le monofilament est en poly(p-phénylène téréphtalamide).

**11.** Assemblage selon l'une quelconque des revendications 1 à 10, caractérisé en ce qu'il a une structure de câble à couches.

**12.** Assemblage selon l'une quelconque des revendications 1 à 11, caractérisé en ce qu'il est imprégné, au moins en partie, par du caoutchouc ou une résine plastique.

**13.** Article renforcé par au moins un assemblage conforme à l'une quelconque des revendications 1 à 12.

**14.** Article selon la revendication 13, caractérisé en ce qu'il est une enveloppe de pneumatique.

**15.** Enveloppe de pneumatique selon la revendication 14, caractérisé en ce que l'assemblage est utilisé pour renforcer le sommet de l'enveloppe.

**Claims**

**1.** A reinforcement assembly formed at least in part of continuous monofilaments of liquid crystal organic polymer or polymers, characterised by the following features:

    (a) the diameter $D_m$ of the monofilaments is at least equal to 40 μm and less than 400 μm;
    (b) the tenacity $T_a$ of the assembly is greater than 80 cN/tex;
    (c) the secant tensile modulus $M_a$ of the assembly is greater than 2000 cN/tex;
    (d) at least one of the monofilaments is practically wound in a helix around an axis, the acute angle $\gamma$ which each monofilament makes with this axis, which is assumed to be rectilinear, being less than 30°C;
    (e) the twist of each monofilament on itself is less than 10 turns per metre of assembly.

**2.** An assembly according to Claim 1, characterised in that the angle $\gamma$ is less than 20°.

3. An assembly according to Claim 2, characterised in that the angle $\gamma$ is less than 10°.

4. An assembly according to any one of Claims 1 to 3, characterised in that it satisfies at least one of the following relationships:

$$T_a \geq 110; M_a \geq 3000; (Ar)_a > 3$$

$(Ar)_a$ being the elongation upon rupture of the assembly, expressed in %.

5. An assembly according to Claim 4, characterised in that it satisfies at least one of the following relationships:

$$T_a \geq 140; M_a \geq 4000; (Ar)_a > 3.5.$$

6. An assembly according to any one of Claims 1 to 5, characterised in that at least one of the monofilaments satisfies the relationships:

$$1.7 \leq (Ti)_m < 180;$$

$$T_m \geq 170 - D_m/3;$$

$$Mi > 2000;$$

$(Ti)_m$ being the linear density of the monofilament expressed in tex, $T_m$ being the tenacity of the monofilament expressed in cN/tex, Mi being the initial modulus of the monofilament expressed in cN/tex, and $D_m$ being expressed in μm.

7. An assembly according to Claim 6, characterised in that the monofilament is an aramid monofilament.

8. An assembly according to any one of Claims 6 or 7, characterised in that the monofilament satisfies the following relationship:

$$(Ar)_m > 2$$

$(Ar)_m$ being the elongation upon rupture of the monofilament.

9. An assembly according to Claim 8, characterised in that the monofilament consists of an aramid and satisfies at least one of the following relationships:

$$T_m \geq 190 - D_m/3; Mi \geq 6800 - 10D_m; (Ar)_m > 3.$$

10. An assembly according to Claim 9, characterised in that the monofilament consists of poly(p-phenylene terephthalamide).

11. An assembly according to any one of Claims 1 to 10, characterised in that it has a layer cable structure.

12. An assembly according to any one of Claims 1 to 11, characterised in that it is impregnated at least in part with rubber or a plastic resin.

13. An article reinforced by at least one assembly according to any one of Claims 1 to 12.

14. An article according to Claim 13, characterised in that it is a tyre.

15. A tyre according to Claim 14, characterised in that the assembly is used to reinforce the crown of the tyre.

**Patentansprüche**

1. Verstärkungsanordnung, die mindestens teilweise von durchgehenden Monofilamenten aus mindestens einem Flüssigkristall aus organischem Polymer gebildet ist, **gekennzeichnet** durch die folgenden Punkte:

a) der Durchmesser $D_m$ der Monofilamente ist mindestens gleich 40 µm und kleiner als 400 µm;

b) die Reißfestigkeit Ta der Anordnung ist größer als 80 cN/tex;

c) der Dehnungs-Sekantenmodul $M_a$ der Anordnung ist größer als 2000 cN/tex;

d) mindestens eines der Monofilamente ist praktisch wendelförmig um eine Achse herum aufgewickelt, wobei der spitze Winkel $\gamma$, den jedes Monofilament mit dieser geradlinig angenommenen Achse bildet, kleiner ist als 30°;

e) die eigene Verdrillung eines jeden Monofilamentes ist kleiner als 10 Windungen pro Meter der Anordnung.

2. Anordnung nach Anspruch 1, dadurch **gekennzeichnet**, daß der Winkel $\gamma$ kleiner ist als 20°.

3. Anordnung nach Anspruch 2, dadurch **gekennzeichnet**, daß der Winkel $\gamma$ kleiner ist als 10°.

4. Anordnung nach irgendeinem der Ansprüche 1 bis 3, dadurch **gekennzeichnet**, daß sie mindestens eine der folgenden Zuordnungen erfüllt:

$$T_a \geqq 110; M_a \geqq 3000; (Ar)_a > 3,$$

wobei $(Ar)_a$ die Bruchdehnung der Anordnung ist, ausgedrückt in %.

5. Anordnung nach Anspruch 4, dadurch **gekennzeichnet**, daß sie mindestens eine der folgenden Zuordnungen erfüllt: $T_a \geqq 140; M_a \geqq 4000; (Ar)_a > 3,5.$

6. Anordnung nach irgendeinem der Ansprüche 1 bis 5, dadurch **gekennzeichnet**, daß mindestens eines der Monofilamente die folgenden Zuordnungen erfüllt:

$$1,7 \leqq (Ti)_m < 180;$$

$$T_m \geqq 170 - D_m/3;$$

$$Mi > 2000;$$

wobei $(Ti)_m$ der Titer des Monofilaments ist, ausgedruckt in tex, $T_m$ die Reißfestigkeit des Monofilaments ist, ausgedrückt in cN/tex, Mi das Anfangsmodul des Monofilaments ist, ausgedrückt in cN/tex, und $D_m$ ausgedrückt ist in µm.

7. Anordnung nach Anspruch 6, dadurch **gekennzeichnet**, daß das Monofilament ein Aramid-Monofilament ist.

8. Anordnung nach irgendeinem der Ansprüche 6 oder 7, dadurch **gekennzeichnet**, daß das Monofilament die folgende Zuordnung erfüllt:

$$(Ar)_m > 2,$$

wobei $(Ar)_m$ die Bruchdehnung des Monofilaments ist.

9. Anordnung nach Anspruch 8, dadurch **gekennzeichnet**, daß das Monofilament aus Aramid besteht und mindestens eine der folgenden Zuordnungen erfüllt:

$$T_m \geqq 190 - D_m/3; Mi \geqq 6800 - 10 D_m; (Ar)_m > 3.$$

10. Anordnung nach Anspruch 9, dadurch **gekennzeichnet**, daß das Monofilament aus Poly(p-Phenylen-Terephthalamid) besteht.

11. Anordnung nach einem der Ansprüche 1 bis 10, dadurch **gekennzeichnet**, daß sie eine Lagenseil-Struktur ist.

12. Anordnung nach irgendeinem der Ansprüche 1 bis 11, dadurch **gekennzeichnet**, daß sie mindestens teilweise mit Gummi oder einem plastischen Harz imprägniert ist.

13. Formkörper der durch mindestens eine Anordnung nach irgendeinem der Ansprüche 1 bis 12 verstärkt ist.

**14.** Formkörper nach Anspruch 13, dadurch **gekennzeichnet**, daß er ein Luftreifen ist.

**15.** Luftreifen nach Anspruch 14, dadurch **gekennzeichnet**, daß die Anordnung zum Verstärken des Luftreifen-Scheitels genutzt ist.